# DEMANDE DE BREVET EUROPEEN

(11) **EP 0 562 891 A1**
(43) Date de publication de la demande: **29.09.1993**
(21) Numéro de dépôt: 93400248.6
(22) Date de dépôt: 02.02.1993
(51) Int. Cl.: G01L 1/24, G08B 13/12, G08B 13/186, G08B 13/10

(54) **Support de fibre optique pour détecteur de pression**

(30) Priorité: 26.03.1992 FR 9203677
(71) Demandeur: OPTO INDUSTRIE, F-63590 Tours sur Meymont (FR)
(72) Inventeur: Mongiols, Mireille J., F-63590 Tours/Meymont (FR)
(74) Mandataire: Joly, Jean-Jacques

(57) **Abrégé**

L'invention concerne un détecteur de pression à fibre optique, comportant un tapis (T) au sein duquel court une fibre optique (6) suivant un tracé sans croisement fibre contre fibre, à laquelle sont associés une source de lumière (7) et un photo-récepteur (8); ce dernier capte le flux lumineux transmis par la fibre optique (6) à partir de la source (7) afin de mettre en évidence les variations que subit celui-ci en raison de la déformation de la fibre optique causée par l'application d'une force de pression au tapis et, ainsi de détecter cette force. La fibre optique (6) est montée sur une feuille support (2) en matière plastique, qu'elle traverse alternativement par des trous de passage (5), cette feuille étant interposée entre deux feuilles (1, 3) plus ou moins rigides suivant la sensibilité désirée par le tapis détecteur.

## Description

La présente invention se rapporte à un détecteur de pression à fibre optique, comportant un tapis qui comprend deux feuilles principales superposées entre lesquelles court une fibre optique suivant un tracé sans croisement fibre contre fibre, à laquelle sont associés une source de lumière et un photo-récepteur, ce dernier captant le flux lumineux transmis par la fibre optique à partir de la source de lumière afin de mettre en évidence les variations que subit celui-ci en raison de la déformation de la fibre optique causée par l'application d'une force de pression au tapis et, ainsi, de détecter cette force.

Un tapis détecteur de ce genre est connu, dans lequel la fibre optique est directement interposée entre les deux feuilles principales, dont l'une offre un sillon de réception de la fibre optique, destiné à guider celle-ci suivant le tracé qu'elle doit suivre.

Une telle structure est difficile à réaliser et conduit à un coût de production peu économique.

En outre, le tapis détecteur connu est conçu de façon que la fibre optique ne soit nulle part en contact avec des éléments à arêtes vives et, par suite, ne subisse que des déformations par incurvation de grand rayon de courbure, supérieur de plusieurs ordres de grandeur au diamètre de la fibre, mais non pas des déformations par micro-courbure sur de telles arêtes vives, qui pourraient entamer l'intégralité de la fibre optique. Or, si celle-ci se trouve ainsi préservée vis-à-vis d'attaques mécaniques localisées risquant d'abréger sa durée de vie, c'est au prix d'une moindre sensibilité en raison de l'absence de micro-courbures qui ajouteraient leur contribution à la génération de variations du flux lumineux. Ce tapis détecteur offre donc une sensibilité médiocre, insuffisante pour déceler en toute sécurité des forces de pression faibles.

Afin de remédier à ces inconvénients, la fibre optique est, selon l'invention, montée sur un support constitué par une feuille mince, faite d'une matière relativement tendre, qu'elle traverse de loin en loin par des trous de passage pour s'étendre alternativement sur une face et sur l'autre face de cette feuille en prenant une configuration ondulée, ladite feuille, munie de la fibre optique, formant une feuille intermédiaire qui est prise en sandwich entre les deux feuilles principales précitées.

Le montage de la fibre optique sur la feuille intermédiaire par passage alterné (régulier ou non) à travers celle-ci via les trous précités assure à la fibre une mise en place aisée et un guidage parfait le long du tracé qui lui est assigné. En outre, la fibre optique subit des déformations par micro-courbures contre les arêtes des trous sous l'effet d'une force de pression, mais sans dommage pour elle en raison du choix d'un matériau constitutif relativement tendre pour la feuille intermédiaire. L'effet de ces micro-déformations s'ajoute celui des déformations de grand rayon de courbure pour augmenter notablement la sensibilité du tapis détecteur, tandis que l'absence d'éléments agressifs au contact de la fibre confère à celle-ci, donc au tapis détecteur, une durée de vie considérable.

Dans une forme de réalisation préférée, les deux feuilles principales du tapis détecteur sont solidarisées mutuellement par collage à travers la feuille intermédiaire uniquement dans des zones où ne passe pas la fibre optique, sans que celle-ci soit en aucun point rendue solidaire de l'une des feuilles principales. Cette disposition évite à la fibre optique des contraintes néfastes qui ne participeraient d'ailleurs probablement que fort peu à la génération de variations du flux lumineux transmis par la fibre.

Dans un tel détecteur, l'une au moins des feuilles principales peut être faite d'un matériau souple ou d'une matière rigide. Autrement dit, les feuilles principales peuvent être toutes deux souples, toutes deux rigides ou l'une souple et l'autre rigide. D'une manière générale, l'usage de feuilles souples convient pour la détection de pressions relativement importantes, tandis que des feuilles rigides permettent de détecter des pressions faibles.

On peut prévoir que le tapis composé des deux feuilles principales et de la feuille intermédiaire munie de la fibre optique soit revêtu, sur sa face destinée à recevoir l'application des forces de pression, d'une feuille de couverture soit souple, soit rigide. Une feuille rigide accroît la sensibilité de détection, spécialement lorsque le point d'application de la force de pression est distant de la fibre optique. Une feuille souple sera sans effet sur la sensibilité, mais pourra offrir d'autres propriétés utiles (protection contre les agressions chimiques, effet anti-dérapant, etc).

Dans un tapis détecteur selon l'invention, la feuille intermédiaire peut comporter au moins une autre fibre optique courant suivant un tracé adjacent à celui de la fibre optique précitée, couplée comme celle-ci à une source de lumière et à un photo-récepteur. Plusieurs variantes sont alors possibles, suivant qu'à toutes les fibres optiques sont associés une même source de lumière et un même photo-récepteur, ou qu'à chaque fibre optique sont associés un couple particulier de source de lumière et de photo-récepteur ou qu'à chaque fibre optique est associée un photo-récepteur particulier, toutes les fibres optiques étant éclairées par une source de lumière commune, ou encore qu'à chaque fibre optique est associée une source de lumière particulière, toutes les fibres optiques aboutissant à un photo-récepteur commun. Des configurations correspondant à un panachage de ces diverses variantes sont également envisageables. De telles dispositions permettent de doter un tapis détecteur de plusieurs zones juxtaposées offrant des propriétés différentes, par exemple des zones de sensibilité inégale.

D'autres particularités et avantages de l'invention ressortiront de la description qui va suivre, en regard des dessins annexés, d'exemples de réalisation non limitatifs.

La figure 1 représente schématiquement, en plan et avec arrachements, un tapis détecteur selon l'invention.

La figure 2 représente une coupe suivant la ligne II-II de la figure 1.

La figure 3 représente, en perspective éclatée,le tapis détecteur de la figure 1.

Les figures 4 à 6 représentent, en plan, différentes formes d'exécution d'un tapis détecteur selon l'invention.

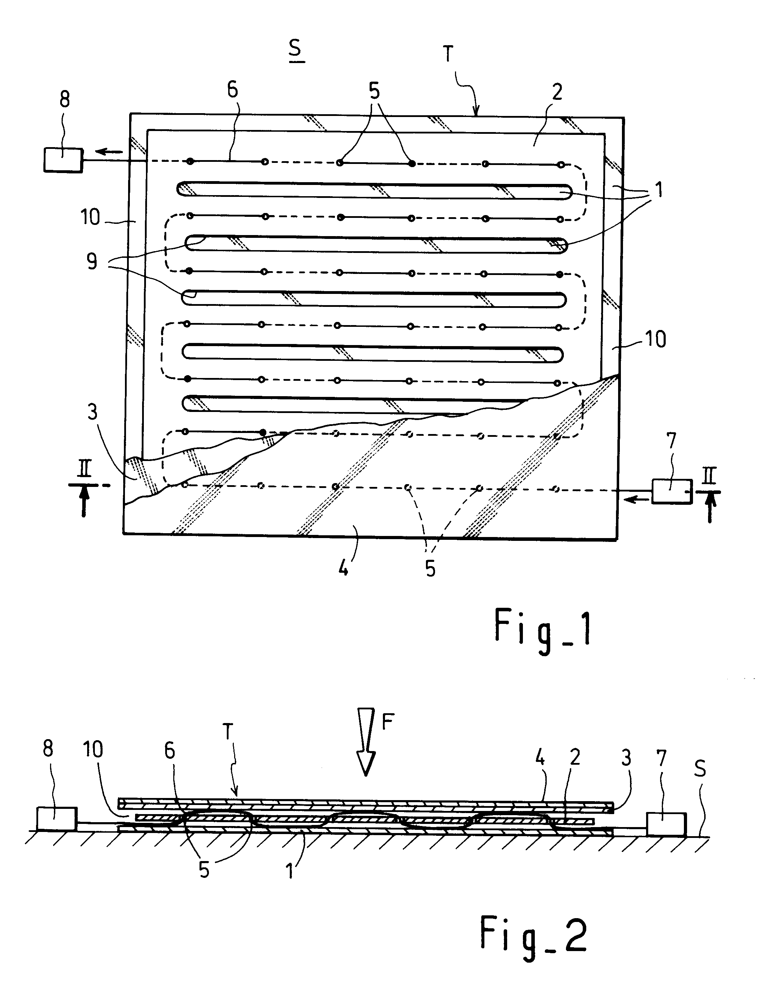

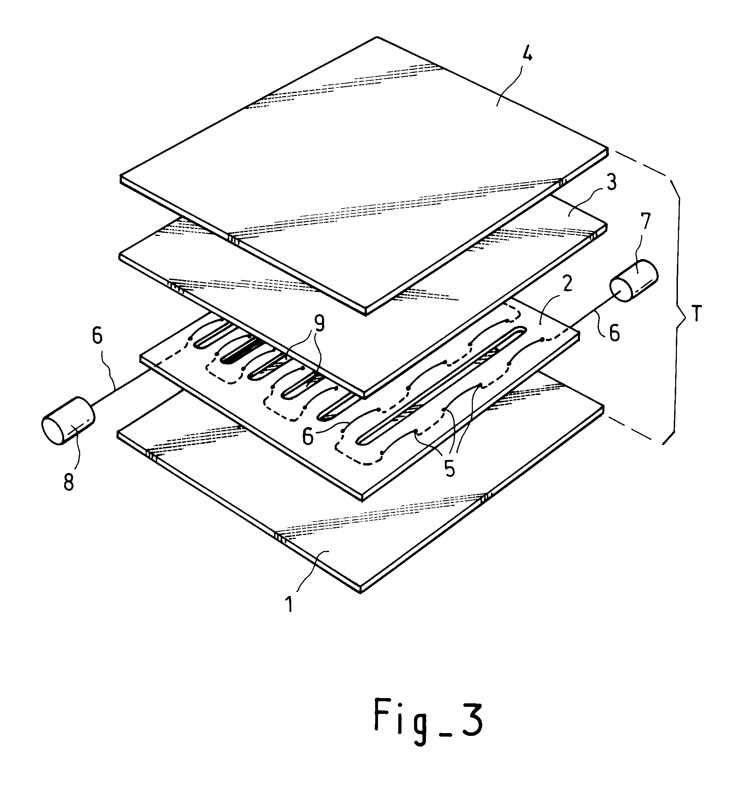

On voit sur la figure 1 un tapis détecteur de pression T, posé à plat sur un sol S suffisamment dur pour lui fournir un ferme appui, tel qu'une dalle de béton, un parquet ou une surface de terre battue. Ce tapis est composé (figures 2 et 3) d'une feuille inférieure 1, d'une feuille intermédiaire 2, d'une feuille supérieure 3 et d'une feuille de couverture 4. La feuille intermédiaire 2 est une feuille continue percée de plusieurs séries de trous 5 alignés, régulièrement répartis aux points d'intersection des lignes d'un quadrillage imaginaire. Par ces trous est passée une fibre optique 6, traversant la feuille 2 alternativement du bas vers le haut et du haut vers le bas, prenant ainsi une configuration ondulée et s'étendant sur toute la feuille 2 suivant un tracé en méandres (figure 1). Cette feuille, ainsi équipée de la fibre optique 6, est prise en sandwich entre les feuilles 1 et 3. Sur le tout est placée la feuille de couverture 4, dont la présence est cependant facultative. Il peut s'agir soit d'une feuille rigide, qui modifie les propriétés mécaniques du tapis T, soit d'une feuille souple, offrant par exemple des propriétés anti-dérapantes. A une extrémité de la fibre optique, réalisée en silice ou en matière plastique, est disposée une source de lumière 7 (telle qu'une diode photo-émissive) dont elle reçoit un flux lumineux; celui-ci, après avoir parcouru la fibre optique, est recueilli par un récepteur photo-sensible 8 (tel qu'un photo-transistor) placé à l'autre extrémité de la fibre optique.

Lorsqu'une force de pression F est appliquée à la surface du tapis T, la fibre optique 6 subit des déformations qui modifient ses propriétés de transmission optique et causent une baisse de l'énergie lumineuse à sa sortie. La variation du flux lumineux correspondante, détectée par le récepteur 8, révèle l'application de la force F au tapis. Dès que cette force est supprimée, le tapis recouvre sa forme naturelle et la fibre optique son état de repos, de sorte que le flux lumineux de sortie reprend son niveau initial.

Les déformations précitées, infligées à la fibre optique 6, sont de deux sortes. Il y a d'une part une incurvation suivant une courbure de grand rayon, spécialement lorsqu'une feuille de couverture rigide 4 est prévue. D'autre part, la fibre optique subit des déformations locales à certains de ses points de passage à travers la feuille intermédiaire 2, qui se manifestent par des micro-courbures de la fibre au contact des arêtes des trous de traversée 5. Ces deux types de déformations angulaires modifient sensiblement l'amplitude du flux lumineux transmis au récepteur 8 par la fibre optique 6 à partir de la source de lumière 7.

On notera que les déformations par micro-courbure sont ici peu contraignantes pour la fibre optique, car elles ne s'accompagnent pas d'agression par des arêtes vives, en raison du choix d'une consistance tendre pour la feuille intermédiaire, laquelle est réalisée en matière plastique, par exemple en PVC, en polyéthylène ou en polypropylène.

Pour pouvoir être détectée par le tapis T, la force F doit être appliquée au droit de la fibre optique 6 ou à proximité immédiate de celle-ci si la feuille supérieure 3 n'est pas recouverte d'une feuille rigide 4; si une telle feuille est présente, la force F peut être appliquée à une plus grande distance de la fibre optique 6, fonction des caractéristiques mécaniques des matériaux constitutifs des différentes feuilles du tapis T.

En jouant sur la rigidité et l'épaisseur des feuilles 1 et 3 entre lesquelles ondule la fibre optique 6, ainsi que de la feuille intermédiaire 2 qui lui sert de support, ou encore sur le pas des points de traversée de la fibre d'une face à l'autre de la feuille 2, il est possible de moduler la plage de sensibilité du tapis capteur de pression et, en cas de besoin, de lui donner une sensibilité élevée permettant la détection de très faibles forces de pression. A titre indicatif, le pas des trous 5 de la feuille intermédiaire peut être de 3 cm environ, et l'épaisseur de celle-ci peut avoisiner 0,5 mm.

Dans le tapis T décrit, il importe que les feuilles 1 et 3 soient liées entre elles, mais non pas à la fibre optique 6, avec laquelle elles doivent être seulement en contact. Ce résultat peut être obtenu en découpant dans la feuille intermédiaire 2 des ouvertures 9 situées entre les méandres de la fibre optique, ainsi qu'une zone marginale 10 sur tout son pourtour. C'est dans ces ouvertures et dans cette zone marginale que les feuilles 1 et 3 sont solidarisées, par exemple par collage, sans que ces liaisons interagissent sur la fibre optique elle-même.

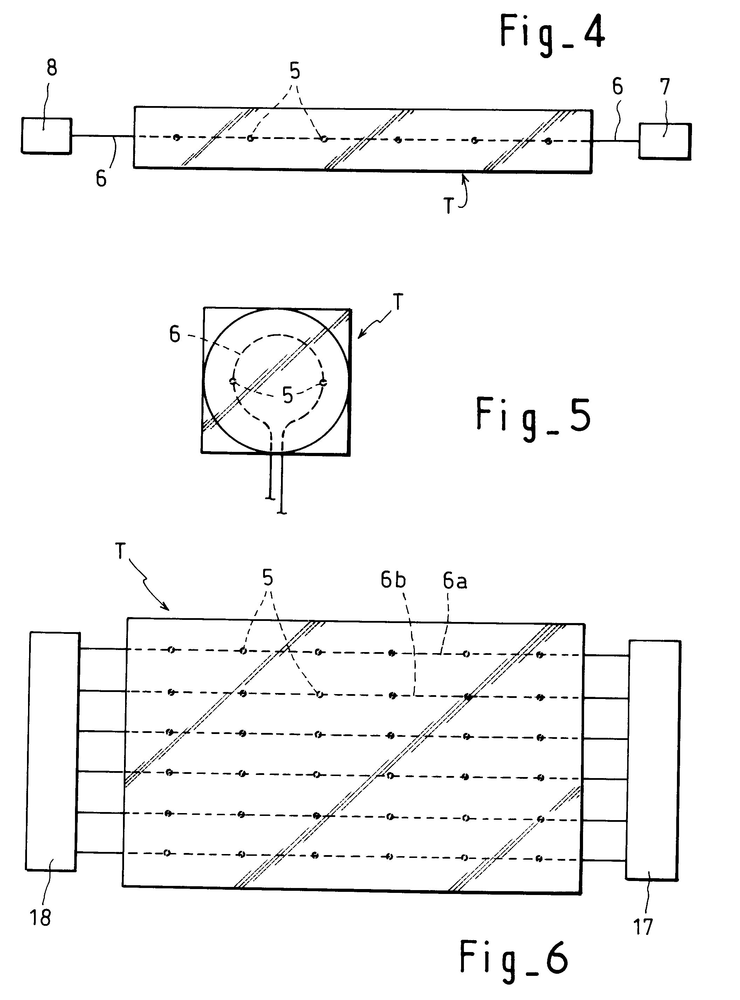

Dans le cas d'un tapis T de faible largeur, la fibre optique peut être disposée non pas suivant un tracé sinueux, mais suivant un tracé rectiligne (figure 4) coïncidant avec l'axe longitudinal du tapis, cette fibre zigzaguant toujours de part et d'autre de la feuille intermédiaire via des trous de passage 5. On obtient ainsi un tapis linéaire, particulièrement bien adapté au comptage des véhicules circulant sur une chaussée.

Lorsqu'on désire réaliser un tapis détecteur de petites dimensions, on peut lui donner la forme d'un carré ou d'une disque (figure 5), la fibre optique 6 y étant disposée suivant une simple boucle circulaire, avec par exemple seulement deux trous de passage 5 à travers la feuille intermédiaire.

En pratique, la source de lumière 7 et le photo-récepteur 8 peuvent être soit intégrés au tapis détecteur, soit disposés extérieurement à une distance compatible avec l'atténuation linéique de la fibre optique 6.

Revenant au cas d'un tapis détecteur rectangulaire, de grandes dimensions, il est encore possible de le réaliser d'une manière dérivée de la structure de la figure 4, en y prévoyant plusieurs fibres optiques distinctes 6a, 6b ,... disposées suivant des tracés juxtaposés sinueux ou, comme dans l'exemple de la figure 6, rectilignes et parallèles, entre un dispositif 17 émetteur de lumière et un dispositif 18 récepteur de lumière. En ce qui concerne ces derniers, le dispositif émetteur 17 peut être constitué soit par un groupe d'émetteurs distincts en nombre égal aux fibres optiques 6a, 6b, ..., chacun d'eux étant affecté à une fibre particulière, soit par un groupe d'émetteurs distincts en nombre inférieur aux fibres optiques, chacun d'eux étant affecté à une ou à plusieurs fibres optiques, soit par un unique émetteur éclairant en commun toutes les fibres optiques. Il en va de même du dispositif récepteur, qui peut semblablement comprendre un ou plusieurs groupes de récepteurs distincts ou un unique récepteur commun. On conçoit qu'il est ainsi possible de créer, dans un même tapis détecteur, plusieurs zones sensibles distinctes. Un tel tapis détecteur peut être utilisé par exemple pour assurer la sécurité au voisinage d'une machine dangereuse, offrant des zones successives qui correspondent à des niveaux de sécurité croissants et que doit franchir en marchant sur le tapis une personne s'approchant de la machine.

Le récepteur 8 ou chacun des récepteurs d'un dispositif 18 est couplé à un circuit électronique qui compare le signal de sortie qu'il délivre à une valeur de seuil. Ce signal est, au repos, supérieur à la valeur de seuil, et s'abaisse au-dessous de celle-ci lorsqu'une force de pression F est appliquée au tapis T, ce qui déclenche la délivrance par le circuit électronique d'un signal manifestant l'application de la force F. En variante, le circuit électronique peut être conçu pour délivrer son signal lorsque le signal de sortie d'un récepteur 8 associé au tapis, normalement inférieur à la valeur de seuil du fait de l'application permanente d'une force F, franchit cette valeur en augmentant du fait de la réduction ou de la disparition de la force F. Cette dernière disposition permet de détecter l'enlèvement d'un objet qui reposait sur le tapis, par exemple en cas de vol de cet objet. Le circuit électronique peut aussi comporter plusieurs seuils permettant de distinguer la plus ou moins grande intensité de la force F appliquée au tapis.

## Revendications

1. Détecteur de pression à fibre optique, comportant un tapis qui comprend deux feuilles principales superposées entre lesquelles court une fibre optique suivant un tracé sans croisement fibre contre fibre, à laquelle sont associés une source de lumière et un photo-récepteur, ce dernier captant le flux lumineux transmis par la fibre optique à partir de la source de lumière afin de mettre en évidence les variations que subit celui-ci en raison de la déformation de la fibre optique causée par l'application d'une force de pression au tapis et, ainsi, de détecter cette force,
caractérisé par le fait que la fibre optique (6) est montée sur un support constitué par une feuille (2) mince, faite d'une matière relativement tendre, qu'elle traverse de loin en loin par des trous de passage (5) pour s'étendre alternativement sur une face et sur l'autre face de cette feuille en prenant une configuration ondulée, ladite feuille (2), munie de la fibre optique (6), formant une feuille intermédiaire qui est prise en sandwich entre les deux feuilles principales (1, 3) précitées.

2. Détecteur selon la revendication 1, caractérisé par le fait que les deux feuilles principales (1, 3) sont solidarisées mutuellement par collage à travers la feuille intermédiaire (2) uniquement dans des zones (9, 10) où ne passe pas la fibre optique (6), sans que celle-ci soit en aucun point rendue solidaire de l'une des feuilles principales.

3. Détecteur selon la revendication 1 ou 2, caractérisé par le fait que l'une au moins des feuilles principales (1, 3) est faite d'un matériau souple.

4. Détecteur selon l'une quelconque des revendications 1 à 3, caractérisé par le fait que l'une au moins des feuilles principales (1, 3) est faite d'un matériau rigide.

5. Détecteur selon l'une quelconque des revendications 1 à 4, caractérisé par le fait que le tapis composé des deux feuilles principales (1, 3) et de la feuille intermédiaire (2) munie de la fibre optique (6) est revêtu, sur sa face destinée à recevoir l'application des forces de pression, d'une feuille de couverture (4) soit souple, soit rigide.

6. Détecteur selon l'une quelconque des revendications 1 à 5, caractérisé par le fait que la feuille intermédiaire (2) comporte au moins une autre fibre optique (6a, 6b, ...) courant suivant un tracé adjacent à celui de la fibre optique (6) précitée, couplée comme celle-ci à une source de lumière et à un photo-récepteur.

7. Détecteur selon la revendication 6, caractérisé par le fait qu'à toutes les fibres optiques (6a, 6b, ...) sont associés une même source de lumière et un même photo-récepteur.

8. Détecteur selon la revendication 6, caractérisé par le fait qu'à chaque fibre optique sont associés un couple particulier de source de lumière et de photo-récepteur.

9. Détecteur selon la revendication 6, caractérisé par le fait qu'à chaque fibre optique est associée un photo-récepteur particulier, toutes les fibres optiques étant éclairées par une source de lumière commune.

10. Détecteur selon la revendication 6, caractérisé par le fait qu'à chaque fibre optique est associée une source de lumière particulière, toutes les fibres optiques aboutissant à un photo-récepteur commun.
